# EUROPÄISCHE PATENTSCHRIFT

(11) **EP 2 271 523 B1**
(45) Veröffentlichungstag und Bekanntmachung des Hinweises auf die Patenterteilung: **18.12.2013**
(21) Anmeldenummer: 09734589.6
(22) Anmeldetag: 01.04.2009
(51) Int. Cl.: B60S 1/38

(54) **WISCHGUMMI FÜR WISCHBLÄTTER VON SCHEIBENWISCHERN**
WIPING RUBBER FOR WIPER BLADES IN WINDSHIELD WIPERS
LAME EN CAOUTCHOUC POUR BALAIS D'ESSUIE-GLACE D'UN ESSUIE-GLACE

(30) Priorität: 25.04.2008 DE 102008001395
(43) Veröffentlichungstag der Anmeldung: 12.01.2011
(73) Patentinhaber: Robert Bosch GmbH, 70442 Stuttgart (DE)
(72) Erfinder: LAY, Reiner, 52072 Aachen (DE); CARLIER, Valerie, B-5340 Gesves (BE)
(86) Internationale Anmeldenummer: PCT/EP2009/053857
(87) Internationale Veröffentlichungsnummer: WO 2009/130117

(56) Entgegenhaltungen:
- DE-A1- 19 741 225
- US-A1- 2003 022 797

## Beschreibung

Die vorliegende Erfindung bezieht sich auf ein Wischgummi für Wischblätter von Scheibenwischern sowie auf eine Beschichtungslösung bzw. ein Verfahren zu dessen Herstellung nach dem Oberbegriff der unabhängigen Ansprüche.

### Stand der Technik

Wischgummiprofile für Wischblätter von Scheibenwischern unterliegen einem anspruchsvollen mechanischen Anforderungsprofil. So müssen diese ein ausreichend gutes Wischbild auf einer zu reinigenden Oberfläche gewährleisten bei gleichzeitig möglichst geringer Geräuschentwicklung während des Wischvorgangs. Weiterhin müssen derartige Wischgummiprofile eine hohe Beständigkeit gegenüber Umwelteinflüssen wie insbesondere Ozon oder UV-Strahlung aufweisen. Um ein derartiges Anforderungsprofil zu gewährleisten, werden Wischgummiprofile im Allgemeinen aus einem geeigneten Elastomer- oder Gummimaterial gefertigt und oberflächlich beschichtet. Durch die Beschichtung wird der Reibungskoeffizient zwischen Wischblatt und zu reinigender Oberfläche beim Wischvorgang reduziert und die Verschleißfestigkeit der zur Reinigung der Oberfläche nötigen Wischkante verbessert.

Üblich ist in diesem Zusammenhang eine Chlorierung des Wischgummiprofils, sowie eine oft zusätzlich aufgebrachte Graphitur. Dazu wird Graphitpulver in einem geeigneten organischen Lösungsmittel suspendiert und zumindest im Bereich der Wischlippe des Wischgummis aufgesprüht. Das organische Lösungsmittel verdampft und die Graphitpartikel verbleiben fein verteilt auf der Gummioberfläche und reduzieren während eines Wischvorgangs die Reibung zwischen Elastomermaterial und zu reinigender Oberfläche.

Nachteilig ist, dass die aufgebrachten Graphitpartikel oft keine ausreichende Haftung auf dem Material des Wischgummiprofils zeigen und bedingt durch deren frühzeitige Ablösung die Wirkung der Graphitur oft nach kurzer Betriebszeit nachlässt.

Um diesem Problem zu begegnen, wird in der DE 10132 026 A1 eine Beschichtung für Wischleisten beschrieben, wobei ein partikelförmiges Feststoffschmiermittel wie beispielsweise Graphit in einem geeigneten organischen Binder, wie beispielsweise einem Polyurethan, einem Polyamid oder einem Epoxydharz suspendiert und aufgetragen wird. Nach Aushärten des Bindemittels werden die Graphitpartikel an der Oberfläche des Wischgummiprofils gebunden.

Ein gattungsgemäßer Wischgummi, eine gattungsgemäße Beschichtungslösung und ein gattungsgemäßes Verfahren zur Herstellung solchen Wischgummis ist aus dem Dokument DE-A-197 41 225 bekannt.

### Offenbarung der Erfindung

Aufgabe der vorliegenden Erfindung ist es, ein Wischgummi für Wischblätter von Scheibenwischern bereitzustellen, das unter allen Betriebsbedingungen eine deutliche Verbesserung der Wischqualität über die geforderte Lebensdauer zeigt.

Diese Aufgabe wird durch ein Wischgummi, sowie durch eine Beschichtungslösung bzw. ein Verfahren zu dessen Herstellung mit den kennzeichnenden Merkmalen der unabhängigen Ansprüche in vorteilhafter Weise gelöst.

Dies beruht insbesondere darauf, dass das erfindungsgemäße Wischgummi eine Oberflächenbeschichtung umfasst, die Carbonfasern enthält. Durch den Einsatz einer carbonfaserhaltigen Oberflächenbeschichtung weist ein damit versehenes Wischgummi eine Verbesserung der Wischqualität auf und zeigt einen deutlich geringeren Verschleiß während der Verwendung, sodass auf eine Chlorierung des Wischgummis verzichtet werden kann.

Weitere vorteilhafte Ausführungsformen der vorliegenden Erfindung sind den Unteransprüchen zu entnehmen.

So ist von Vorteil, wenn die in der Beschichtung des Wischgummis enthaltenen Carbonfasern nur teilweise carbonisiert sind. Der besondere Vorteil der Verwendung von teilcarbonisierten Carbonfasern besteht darin, dass diese einen Restgehalt an funktionellen Gruppen wie beispielsweise Hydroxid-, Amid-, Imid-, oder Nitrilgruppen aufweisen. Diese verbliebenen funktionellen Gruppen können dann mit einer Binderkomponente der Beschichtung reagieren und die Carbonfasern werden chemisch fest an der Oberfläche des Wischgummis verankert.

Erfindungsgemäß ist von Vorteil, daß die Carbonfasern eine Länge von deutlich kleiner als 1 mm aufweisen. Der besondere Vorteil der Verwendung von Fasern dieser Länge besteht darin, dass Reibung und Verschleiß des Wischgummis hinreichend reduziert werden unter Beibehaltung der hohen Wischqualität.

Gemäß einer besonders vorteilhaften Ausführungsform der vorliegenden Erfindung wird während des Beschichtungsprozesses ein magnetisches Feld an das Wischgummi angelegt. Werden zur Beschichtung ferro- oder paramagnetische Carbonfasern eingesetzt, so können diese gezielt auf der Oberfläche ausgerichtet werden. Von besonderem Vorteil ist dabei eine Ausrichtung der Carbonfasern im Wesentlichen senkrecht zu der zu beschichtenden Wischgummioberfläche.

### Kurze Beschreibung der Zeichnung

Ein Ausführungsbeispiel der vorliegenden Erfindung ist in den Figuren verdeutlicht und in der nachfolgenden Beschreibung näher beschrieben. Es zeigt:
- Figur 1: einen schematischen Querschnitt eines Wischgummis gemäß einer ersten Ausführungsform der vorliegenden Erfindung und
- Figur 2: eine schematische Darstellung der bei einer Vernetzung der Oberflächenbeschichtung des Wischgummis ablaufenden chemischen Reaktionen.

### Ausführungsformen der Erfindung

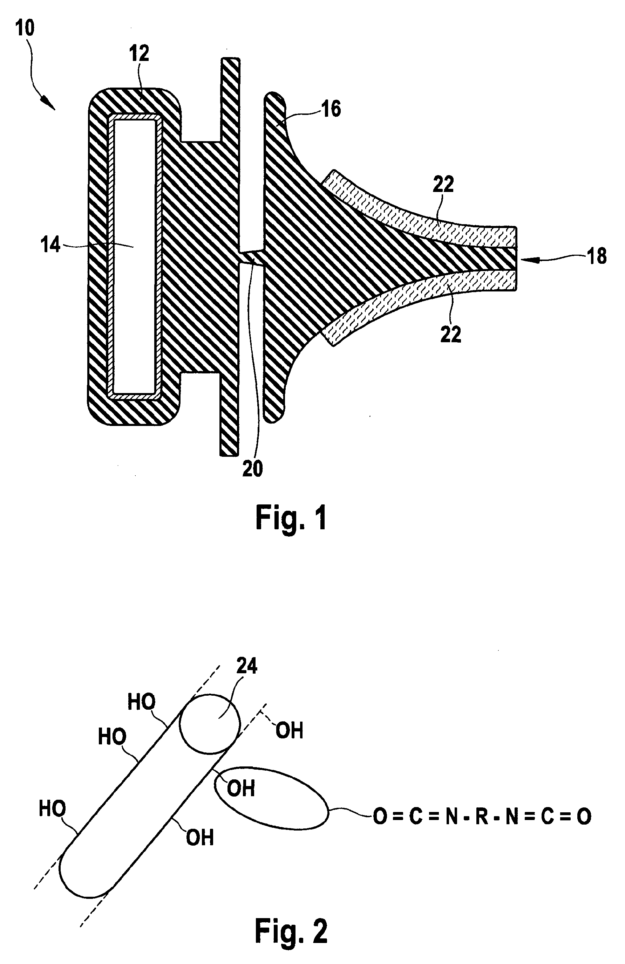

In Figur 1 ist ein Wischgummi eines Wischblattes für Scheibenwischer gemäß einer ersten Ausführungsform der vorliegenden Erfindung abgebildet. Dabei umfasst das Wischgummi 10 einen Wischerkopf 12, dessen hauptsächliche Aufgabe in der Fixierung des Wischgummis an einer nicht dargestellten Wischleiste des Scheibenwischers besteht. Zu diesem Zweck ist das Wischgummi 10 mit einem in Längsrichtung des Wischgummis ausgerichteten, von Gummimaterial umschlossenen Hohlraum 14 zur Einführung einer Wischerleiste versehen. Weiterhin weist das Wischgummi 10 eine Wischlippe 16 auf, deren Wischkante 18 mit einer zu reinigenden Oberfläche in Kontakt tritt. Der Wischerkopf 12 und die Wischlippe 16 sind beispielsweise über einen Kippsteg 20 miteinander verbunden, wobei dieser eine Neigung der Wischlippe 16 gegenüber dem Wischerkopf 12 je nach Wischrichtung des Scheibenwischers gestattet.

Das Wischgummi 10 ist bspw. aus einem geeigneten Elastomer - bzw. Gummimaterial wie beispielsweise Naturkautschuk (NR), Polychloropren (CR), EPDM, Isopren (IR), Polybutadien (BR), Styrolbutadien (SBR), Acrylnitrilbutadien (NBR), Mischungen von Acrylnitrilbutadien mit PVC oder Mischungen der genannten Gummimaterialien untereinander gefertigt.

Um insbesondere die mechanischen Eigenschaften eines solchen Wischgummis günstig beeinflussen zu können, ist dieses vorzugsweise zumindest in den Bereichen, die mit einer zu reinigenden Oberfläche in Kontakt kommen, mit einer Oberflächenbeschichtung 22 versehen.

Dabei kann die Oberflächenbeschichtung 22 beispielsweise lediglich die Seitenwangen der Wischlippe 16 unter Auslassung der Wischkante 18 bedecken, wie in Figur 1 dargestellt. Es ist jedoch auch möglich, die Wischlippe 16 als Ganzes mit einer Oberflächenbeschichtung 22 zu versehen und diese gegebenenfalls auch auf der Oberfläche des Kippstegs 20 bzw. des Wischkopfs 12 zumindest partiell aufzubringen.

Die Oberflächenbeschichtung 22 umfasst erfindungsgemäß einen Fasern umfassenden Füllstoff als Gleitmittel. Bei den Fasern handelt es sich um Carbonfasern, wobei diese vorzugsweise nur teilcarbonisiert sind. Wird der Carbonisiervorgang nur partiell durchgeführt, so verbleiben auf der Oberfläche der Faser noch eine gewisse Anzahl funktioneller Gruppen. Werden die teilcarbonisierten Carbonfasern auf der Basis von Polyacrylnitril (PAN) oder auf der Basis von Cellulose- oder Cellulosederivaten ausgeführt, so verbleiben nach der Teilcarbonisierung noch Hydroxid-, Amid-, Imid- bzw. Nitrilgruppen auf der Oberfläche der Carbonfaser. Dies bietet die Möglichkeit, dass die Carbonfasern über ihre funktionellen Gruppen mit einem Reaktionsharz fest auf der Oberfläche des Wischgummimaterials fixiert werden können. Aufgrund der chemischen Anbindung der teilkarbonisierten Karbonfasern an die Oberfläche des Wischgummis 10 wird die Verschleißbeständigkeit der Oberflächenbeschichtung 22 deutlich erhöht.

Die verwendeten Carbonfasern weisen erfindungsgemäß eine Länge von beispielsweise kleiner 1 mm auf, vorzugsweise kleiner 200 µm und insbesondere zwischen 3 und 100 µm.

Zur Beschichtung des Wischgummimaterials wird eine Beschichtungslösung verwendet, die Carbonfasern und bspw. eine Harzkomponente als Binder umfasst. Die Beschichtungslösung wird vorzugsweise als Zweikomponentensystem verarbeitet und enthält zu diesem Zweck vorzugsweise einen geeigneten Härter. Der Anteil an Carbonfasern an der Beschichtungslösung beträgt beispielsweise 10 bis 70 Gewichtsprozent. Als Harzkomponente der Beschichtungslösung wird beispielsweise ein Harz auf Basis eines Cyanatesters eingesetzt, der Di- Tri- oder Oligocyanate enthält.

Die Auftragung der Beschichtungslösung auf das Wischgummi erfolgt beispielsweise mittels einer Transferrolle bzw. mittels Tauchen oder Sprühen. Im Falle des in Figur 1 dargestellten Wischgummis 10 erfolgt die Beschichtung vorzugsweise beidseitig des Wischlippenbereichs. Dazu wird zunächst das Wischgummiprofil in Form eines an den Wischkanten 18 miteinander verbundenen Tandemprofils extrudiert bzw. gespritzt oder gepresst. Die Auftragung der Beschichtungslösung erfolgt nach der Vulkanisation und der Vereinzelung der Wischgummiprofile.

Nach Auftragen der Beschichtungslösung erfolgt ein Trocknungs- bzw. Vernetzungsprozess, dessen chemische Grundlagen in Figur 2 verdeutlicht sind. Dort ist schematisch eine Carbonfaser 24 dargestellt, die oberflächlich funktionelle Gruppen in Form von Hydroxidgruppen aufweist. Diese reagieren in dem in Figur 2 dargestellten Beispiel mit einem Diisocyanat unter Abspaltung von Wasser unter chemischer Fixierung der Faser 24 an die auf Cyanatesterbasis ausgebildete Bindermatrix.

Gemäß einer weiteren Ausführungsform ist es möglich, die Carbonfasern ferro- oder paramagnetisch einzustellen. Dazu werden diese zuvor mit einem ferro- oder paramagnetischen Metall bspw. mittels PVD oder CVD vorzugsweise dünn beschichtet. Wird während oder nach der Aufbringung der Beschichtungslösung und insbesondere vor der Aushärtung derselben ein elektromagnetisches Feld an das Wischgummi angelegt, so reichern sich die in der Beschichtungslösung enthaltenen Carbonfasern 24 an der Oberfläche der entstehenden Schicht 22 an und werden üblicherweise senkrecht zur Oberfläche des Wischgummis ausgerichtet. Auf diese Weise kann eine weitere Reduzierung des Reibungswiderstandes der Oberflächenbeschichtung 22 erreicht werden.

Nachfolgend sind beispielhaft die Zusammensetzungen von Beschichtungslösungen aufgeführt, deren Auftrag auf einem Wischgummi zu einer deutlich reibungsvermindernden Beschichtung führt.

| **Ausführungsbeispiel** | **1** | **2** | **3** | **4** |
|---|---|---|---|---|
| **Komponente** | **Anteil in Gew.%** | **Anteil in Gew.%** | **Anteil in Gew.%** | **Anteil in Gew.%** |
| Carbonfasern | 10,0 | 15,0 | 18,0 | 21,0 |
| Polyacrylat | 9,0 | 6,6 | --- | --- |
| Polyester | --- | --- | 6,6 | --- |
| Melamin-Härter | 2,8 | --- | --- | 10,0 |
| Isocyanat-Härter | - | 1,7 | 3,7 | --- |
| Verdickungsmittel (Lösung) | 2,0 | --- | --- | 3,0 |
| Butylglycol | 14,0 | --- | --- | 14,0 |
| Wasser (demineralisiert) | 50,5 | --- | --- | 52,0 |
| Xylol | --- | 22,5 | 22,0 | --- |
| Methoxypropylacetat | --- | 22,5 | 22,0 | --- |
| N-Butylacetal | --- | 25,7 | 25,9 | --- |

Das erfindungsgemäße Wischgummi kann in vorteilhafter Weise in Scheibenwischern für Kraftfahrzeuge, Schienenfahrzeuge oder Luftfahrzeuge verwendet werden, sowie zur Oberflächenreinigung im Rahmen von chemischen Prozessen. Weiterhin ist auch dessen Anwendung als Dichtungsmaterial für Tür- oder Fensterdichtungen denkbar.

## Patentansprüche

1. Wischgummi für Wischblätter von Scheibenwischern, das einen aus einem Elastomer- oder Gummimaterial gebildeten Profilkörper umfasst, welcher zumindest teilweise mit einer Oberflächenbeschichtung versehen ist, **dadurch gekennzeichnet, dass** die Oberflächenbeschichtung (22) Carbonfasern (24) enthält, wobei die Carbonfasern (24) eine Länge von < 1 mm aufweisen.

2. Wischgummi nach Anspruch 1, **dadurch gekennzeichnet, dass** die Carbonfasern (24) nur teilweise carbonisiert sind.

3. Wischgummi nach Anspruch 1 oder 2, **dadurch gekennzeichnet, dass** die Carbonfasern (24) auf Basis von Cellulose oder PAN ausgeführt sind.

4. Wischgummi nach einem der Ansprüche 1 bis 3, **dadurch gekennzeichnet, dass** die Carbonfasern (24) ferro- oder paramagnetisch ausgeführt werden.

5. Beschichtungslösung für Gummimaterialien insbesondere für ein Wischgummi nach einem der Ansprüche 1 bis 4, die mindestens ein partikelförmiges Gleitmittel sowie einen Binder und/oder ein Lösungsmittel umfasst, **dadurch gekennzeichnet, dass** das partikelförmige Gleitmittel durch Carbonfasern (24) gebildet ist, wobei die Carbonfasern (24) eine Länge von < 1 mm aufweisen.

6. Beschichtungslösung nach Anspruch 5, **dadurch gekennzeichnet, dass** der Binder auf der Basis eines Cyanatesters ausgeführt ist.

7. Beschichtungslösung nach Anspruch 5 oder 6, **dadurch gekennzeichnet, dass** der Gehalt an Carbonfasern (24) in der Beschichtungslösung 10 bis 70 Gew.% beträgt.

8. Verfahren zur Herstellung von Wischgummis nach einem der Ansprüche 1 bis 4, wobei eine Beschichtungslösung nach einem der Ansprüche 5 bis 7 auf eine Wischgummiprofil aufgetragen und einem Trocknungsprozess unterzogen wird.

9. Verfahren nach Anspruch 8, **dadurch gekennzeichnet, dass** vor dem Trocknungsprozess ein magnetisches Feld an das Wischgummi (10) angelegt wird.

## Claims

1. Wiper rubber for wiper blades of windshield wipers, which encompasses a profile formed from an elastomer material or from a rubber material, where the profile has at least partially a surface coating, **characterized in that** the surface coating (22) comprises carbon fibers (24), where the length of the carbon fibers (24) is < 1 mm.

2. Wiper rubber according to Claim 1, **characterized in that** the carbon fibers (24) have been only partially carbonized.

3. Wiper rubber according to Claim 1 or 2, **characterized in that** the carbon fibers (24) are cellulose-based or PAN-based.

4. Wiper rubber according to any of Claims 1 to 3, **characterized in that** the carbon fibers (24) are ferro- or paramagnetic.

5. Coating solution for rubber materials, in particular for a wiper rubber according to any of Claims 1 to 4, where the solution encompasses at least one particulate lubricant, and also one binder and/or one solvent, **characterized in that** the particulate lubricant is composed of carbon fibers (24), where the length of the carbon fibers (24) is < 1 mm.

6. Coating solution according to Claim 5, **characterized in that** the binder is cyanate-esterbased.

7. Coating solution according to Claim 5 or 6, **characterized in that** the proportion of carbon fibers (24) in the coating solution is from 10 to 70% by weight.

8. Process for producing wiper rubbers according to any of Claims 1 to 4, where a coating solution according to any of Claims 5 to 7 is applied to a wiper rubber profile and is subjected to a drying process.

9. Process according to Claim 8, **characterized in that** a magnetic field is applied to the wiper rubber (10) prior to the drying process.

## Revendications

1. Caoutchouc pour lame d'essuie-glace, qui comporte un corps profilé formé d'un matériau élastomère ou caoutchouteux et dont au moins une partie est dotée d'un revêtement de surface,
**caractérisé en ce que**
le revêtement de surface (22) contient des fibres de carbone (24) et **en ce que** les fibres de carbone (24) ont une longueur < 1 mm.

2. Caoutchouc selon la revendication 1, **caractérisé en ce que** les fibres de carbone (24) ne sont carbonées que partiellement.

3. Caoutchouc selon les revendications 1 ou 2, **caractérisé en ce que** les fibres de carbone (24) sont à base de cellulose ou de PAN.

4. Caoutchouc selon l'une des revendications 1 à 3, **caractérisé en ce que** les fibres de carbone (24) sont rendues ferromagnétiques ou paramagnétiques.

5. Solution de revêtement pour matériaux de caoutchouc, en particulier pour un caoutchouc selon l'une des revendications 1 à 4, et contenant au moins un lubrifiant en particules ainsi qu'un liant et/ou un solvant,
**caractérisée en ce que**
le lubrifiant en particules est formé de fibres de carbone (24) et **en ce que** les fibres de carbone (24) ont une longueur < 1 mm.

6. Solution de revêtement selon la revendication 5, **caractérisée en ce que** le liant est basé sur un ester de cyanate.

7. Solution de revêtement selon les revendications 5 ou 6, **caractérisée en ce que** la teneur en fibres de carbone (24) dans la solution de revêtement est comprise entre 10 et 70 % en poids.

8. Procédé de fabrication de caoutchouc selon l'une des revendications 1 à 4, dans lequel une solution de revêtement selon l'une des revendications 5 à 7 est appliquée sur un profilé en caoutchouc et subit une opération de séchage.

9. Procédé selon la revendication 8, **caractérisé en ce qu'**un champ magnétique est appliqué sur le caoutchouc (10) avant l'opération de séchage.
